# EUROPÄISCHE PATENTANMELDUNG

(11) **EP 1 396 612 A1**
(43) Veröffentlichungstag der Anmeldung: **10.03.2004**
(21) Anmeldenummer: 02019753.9
(22) Anmeldetag: 04.09.2002
(51) Int. Cl.: F01D 25/18, F16J 15/16, F16J 15/447, B01F 15/00, F16C 33/80

(54) **Dichtung für Fluidenergiemaschine**

(71) Anmelder: BorgWarner Inc., Troy, Michigan 48084 (US)
(72) Erfinder: Claus, Hartmut, 67269 Grünstadt, Bad Dürkheim (DE)
(74) Vertreter: Kügele, Bernhard

(57) **Zusammenfassung**

Eine Strömungsmaschine (1) besitzt eine Welle (18), an deren Ende ein Rotor (3) befestigt ist. Ein Lagergehäuseteil (4) dient zum Lagern der Welle (18), und ein Rotorgehäuseteil (2) mit einem Rotorraum (3') zur Unterbringung des am Ende der Wellen (18) befestigten Rotors (3). Zwischen Lagergehäuseteil (4) und Rotorraum (3') liegt eine Dichtung (11-17). Die Welle (18) weist eine, insbesondere konische, durch eine Radialwandfläche (13, 14) abgeschlossene Einziehung (12) auf. Die Dichtung (11-17) besitzt einen Hülsenkörper (15), der an einem Gehäuseteil (5') befestigt ist und ein freies Ende (21) aufweist, das in die Einziehung (12) ragt, wo es von der Radialwandfläche (13, 14) abgedeckt ist.

## Beschreibung

### Gebiet der Erfindung

Die vorliegende Erfindung bezieht sich auf eine Strömungsmaschine mit einer Welle, an deren Ende ein Rotor befestigt ist, einem Lagergehäuseteil zum Lagern der Welle, einem Rotorgehäuseteil mit einem Rotorraum zur Unterbringung des am Ende der Welle befestigten Rotors, und einer Dichtung zwischen Lagergehäuseteil und Rotorraum.

Wenn im Rahmen dieser Beschreibung von einer "Strömungsmaschine" die Rede ist, dann wird zwar bevorzugt darunter ein Turbolader verstanden, wie weiter unten noch ausgeführt wird, doch kann es sich auch um eine andere Strömungsmaschine handeln, wie eine Sekundärluftlader od.dgl.

### Hintergrund der Erfindung

Eine derartige Strömungsmaschine ist beispielsweise den US-A-2,860,827; 4,659,295 oder -4,780,054 zu entnehmen. Dabei sind die Dichtungen aus mehreren Gründen erforderlich: Zum einen wird den Lagern des Lagergehäuses Schmiermittel, im allgemeinen unter einem gewissen Druck zugeführt, und es muß verhindert werden, daß solches Schmiermittel in den Rotorraum gelangt. Zum anderen steht auch das mit dem Rotor zusammenarbeitende Fluid unter einem gewissen Druck und soll nicht aus dem Rotorraum in das Lagergehäuse gelangen. Die bekannten Lösungen sehen daher im allgemeinen einfache oder mehrfache Labyrinthdichtungen vor. Solche Labyrinthdichtungen sind zwar für die Dichtung gegen einen Gasdruck aus dem Rotorraum recht wirksam, für unter Druck stehendes Schmiermittel reichen sie aber insbesondere dann nicht aus, wenn etwa die Rotorwelle nicht oder nicht immer waagrecht gelagert ist. Denn in einem solchen Falle tritt zum Schmiermitteldruck auch noch die Schwerkraft hinzu.

### Kurzfassung der Erfindung

Der Erfindung liegt dich Aufgabe zugrunde, die Dichtung zwischen Rotorraum und Lagergehäuse zu verbessern. Insbesondere soll bei wenigstens annähernd senkrecht stehenden Wellen ein Einsickern von Schmiermittel in den Rotorraum besser verhindert werden.

Erfindungsgemäß gelingt dies dadurch, daß die Welle eine durch eine Radialwandfläche abgeschlossene Einziehung aufweist, und daß die Dichtung einen Hülsenkörper besitzt, der an einem Gehäuseteil befestigt ist und ein freies Ende aufweist, das in die Einziehung ragt, wo es von der Radialwandfläche abgedeckt ist. Die Einziehung kann als etwa zylindrische Nut ausgebildet sein, ist aber bevorzugt konisch, d.h. mit von der Hülse weg abnehmendem Durchmesser.

Wie später noch ausgeführt wird, könnte die Hülse der Länge nach geschlitzt sein und beim Montieren um die Welle gewickelt werden, um es zu erreichen, daß das freie Ende in die Einziehung ragt. Denn in dieser Lage kann ja die Hülse nicht in Achsrichtung auf die Welle aufgeschoben werden. Es ist jedoch bevorzugt, daß die Dichtung einen Hülsenkörper aus einem Gedächtnis-Metall ("memory metal") besitzt und mit seinem freien Ende über der Einziehung liegt und unter Temperatureinwirkung auf Grund seines Gedächtnisses in die Einziehung einfällt.

Das hier gelöste Problem liegt also darin, daß eine solche, ungeschlitzte, Hülse - ohne das "Gedächtnis" - nie ins Innere der Einziehung montierbar wäre. In jedem Falle, und insbesondere wenn das freie Ende der Hülse auf Grund des Gedächtnisses in die Einziehung eingefallen ist, und dann von der Radialwandfläche abgedeckt ist, wird so eine Art "Dachkonstruktion" geformt, die etwaige Flüssigkeit nach außen hin ableitet. Diese Ableitwirkung, wie bei einem Dach wird noch unterstützt, wenn die Radialwandfläche einen zur Hülse auskragenden Rand besitzt.

Es ist klar, daß die Erfindung auch bei horizontal gelagerten Wellen anwendbar ist, doch nimmt die Welle in einer bevorzugten Anwendung eine vertikale Lage ein.

Im Prinzip ist es im Rahmen der Erfindung nicht ausgeschlossen, daß die Einziehung im Rotorraum untergebracht ist, wo beispielsweise der Rotor selbst die Radialwandfläche bilden könnte. Dieses hätte sogar den Vorteil, daß zwischen die Radialwandfläche (den Rotor) und das freie Ende der Hülse eindringendes Fluid (z.B. Abgas eines Verbrennungsmotors) radial einwärts eindringen müßte, dabei aber den Fliehkräften des Rotors ausgesetzt wird. Da aber im Rotorraum die Platzverhältnisse im allgemeinen sehr beengt sind, ist es bevorzugt, wenn die Einziehung im Lagergehäuseteil liegt.

Im Prinzip könnte das freie Ende des Hülsenkörpers in Form von frei beweglichen, durch Einschnitte voneinander getrennten axialen Lappen gebildet sein, denn bei der Bewegung des freien Endes unter der Wirkung des "Gedächtnisses" würden solche Lappen sowieso einander abdecken und so gegen das Eindringen von Schmiermittel schützen. Es hat sich aber gezeigt, daß es durchaus machbar ist, den Hülsenkörper von einer Zylinderhülse auszubilden, womit natürlich die Abdichtung besser gesichert ist. Dabei ist es im Rahmen der Erfindung durchaus möglich, die Zylinderhülse mit einem durchgehenden Längsschlitz zu versehen, um sie von außen um die Welle herum aufstecken bzw. um sie herumwickeln zu können, statt sie in Axialrichtung, vor der Montage des Rotors, aufschieben zu müssen.

Die Radialwandfläche kann die radiale Fläche der Einziehung selbst sein, ist aber bevorzugt als von der Welle radial abstehender Radkörper ausgebildet

Obwohl bereits gesagt wurde, daß die erfindungsgemäße Strömungsmaschine verschiedener Art, beispielsweise von der Art einer von einer Flüssigkeit betriebenen Turbine, sein kann, so ist wohl verständlich, daß die erfindungsgemäß erzielbaren Vorteile dann voll zur Geltung kommen, wenn die Strömungsmaschine als Turbolader ausgebildet ist und das genannte Rotorgehäuse das Turbinengehäuse bildet. Denn bei einem Turbolader treten bekanntlich hohe Temperaturen auf, die die erwünschte Verformung der Hülse unterstützen.

### Kurzbeschreibung der Zeichnung

Weitere Einzelheiten der Erfindung ergeben sich an Hand der nachfolgenden Beschreibung eines in der Zeichnung schematisch dargestellten bevorzugten Ausführungsbeispieles. Es zeigen:
- Fig. 1: einen teilweise Axialschnitt durch eine Strömungsmaschine, wovon
- Fig. 2: einen den Ausschnitt II der Fig. 1 im größeren Maßstab veranschaulicht.

### Detaillierte Beschreibung der Zeichnung

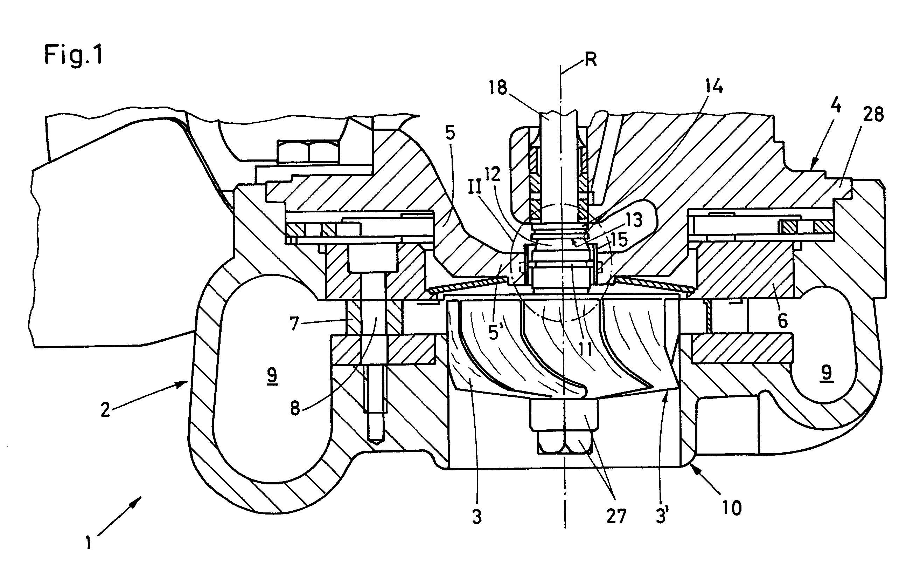

Gemäß Fig. 1 weist ein Turbolader 1 oder eine andere Strömungsmaschine in üblicher Weise einen Turbinengehäuseteil 2 und einen Lagergehäuseteil 4 auf. Im Falle eines Turboladers wird auch noch ein Kompressorgehäuseteil vorgesehen sein, der jedoch nicht dargestellt ist. Turbinengehäuseteil 2 und Lagergehäuseteil 4 sind entlang einer Rotations- bzw. Längsachse R angeordnet, entlang welcher Achse R sich eine Welle 18 erstreckt. Am Ende dieser Welle 18 ist ein Rotor durch an sich bekannte Befestigungsmittel 27 befestigt, nämlich im Falle eines Turboladers ein Turbinenrotor 3 innerhalb eines Rotorraums 3' des Turbinengehäuses 2.

Der Turbinengehäuseteil 2 enthält einen Schaufellagerring 6 eines an sich bekannten Leitgitters variabler Geometrie mit über den Umfang verteilten Leitschaufeln 7, die um ihre den Schaufellagerring 6 durchsetzenden Schwenkachsen oder Schwenkwellen 8 verdrehbar sind, so daß sie zwischen einander Düsenquerschnitte bilden, die je nach der Lage der Leitschaufeln 7, nämlich mehr radial oder mehr tangential, größer oder kleiner sind und den in der Mitte an der Achse R gelegenen Turbinenrotor 3 mehr oder weniger mit dem über einen die Achse R spiralig umgebenden Zufuhrkanal 9 zugeführten und über einen zentralen Stutzen 10 abgeführten Abgas eines Motors beaufschlagen, um über den Turbinenrotor 3 einen auf derselben Welle 18 sitzenden (nicht dargestellten) Kompressorrotor anzutreiben. Der Mechanismus zum Verstellen der Schaufeln kann verschiedener, an sich bekannter Art sein.

An dieser Stelle sei erwähnt, daß beim vorliegenden Ausführungsbeispiel zwar die Verwendung eines Leitgitters variabler Geometrie als Gassteuereinrichtung beschrieben wird, daß aber im Rahmen der Erfindung gewünschtenfalls auch andere an sich bekannte Gassteuereinrichtungen verwendet werden können, wie etwa gesteuerte Nebenschlußleitungen. Solche den Turbolader umgehende Leitungen mit entsprechenden Steuerventilen sind beispielsweise aus der JP-8-240156 bekannt geworden, die eine Art By-pass für den Turbolader vorsieht (im Englischen "waste gate" genannt") oder aus der WO 02/27164.

Die Welle 18 ist im Lagergehäuse 4, und zwar an mehreren Stellen gelagert. Am Übergang zwischen Lagergehäuseteil 4 und Turbinengehäuseteil 2 ist die Welle an einem in das Rotorgehäuse 2 ragenden Zylinderteil 5 abgedichtet, um den herum auch der Verstellmechanismus für die Leitschaufeln 7 angeordnet ist, welcher nicht Gegenstand der vorliegenden Erfindung ist.

Das Lagergehäuse 4 endet gegen das Turbinengehäuse 2 hin in einem Endflansch 28, der in eine entsprechende, aus Fig. 1 ersichtliche, Vertiefung des Turbinengehäuses 2 eingesetzt wird, bevor beide Gehäuseteile 2, 4 miteinander verschraubt werden. Es versteht sich, daß es aber für die Erfindung unerheblich ist, von welchem Gehäuseteil 2 oder 4 der die Lagerung am Übergang vom Lagergehäuseteil 4 zum Turbinengehäuseteil 2 bildende Zylinderteil 5 gebildet wird; theoretisch könnte dieser Zylinderteil 5, etwa zusammen mit dem Flansch 28, auch mit dem Turbinengehäuseteil 2 aus einem Stück sein. Dennoch wird in jedem Fall das Problem der Abdichtung zwischen diesen beiden Gehäuseteilen 2, 4 bestehen.

Zu diesem Zweck besitzt die Welle 18 im Bereiche der Abschlußwand 5' des Zylinderteils 5 eine Umfangsnut 11, die mit einer von der Abschlußwand 5' vorragenden Dichtung zusammenwirkt. Ferner besitzt die Welle 18 eine sich konisch von der Abschlußwand 5' weg verjüngende, somit konische Einziehung 12, die in einer radialen Wandfläche 13 begrenzt ist. Diese Radialwandfläche 13 setzt sich radial nach außen in einem Radkörper 14 fort.

Von der Wand 5' aus ragt eine darin eingespannte Hülse 15 gegen diese Einziehung 12 derart vor, daß ihr freies Ende über der Einziehung 12 liegt. Dies ist die Situation bei der Montage. Sobald der Betrieb des Turbinenrotors 3 begonnen hat und sich der Turbinengehäuseteil 2 erhitzt, biegt sich jedoch das freie Ende der Hülse 15 in die Einziehung 12 hinein, wo sie von der Radialwandfläche 13 bzw. deren Fortsatz 14 dachartig überdeckt wird.

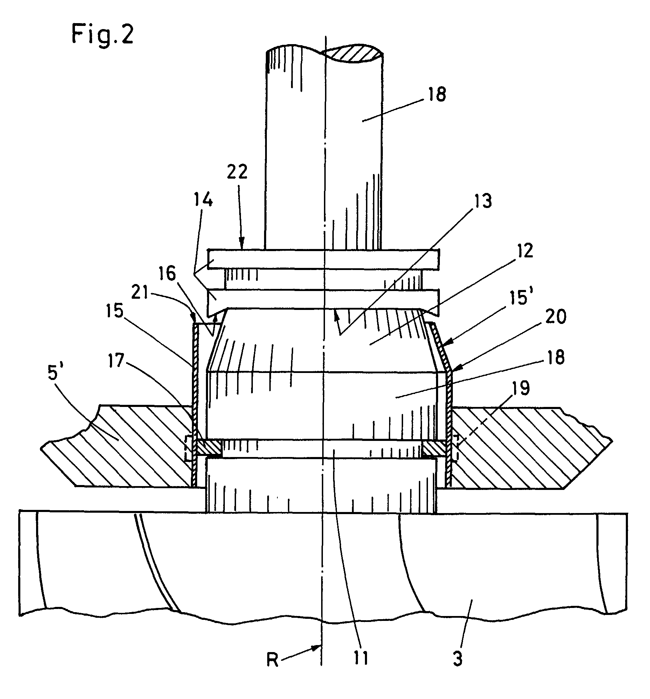

Die Einzelheiten dieser Anordnung sind besser aus Fig. 2 ersichtlich. In dieser Figur ist unten der Rotor 3 an der Welle 18 zu sehen, sowie die Abschlußwand 5' des nicht näher dargestellten Zylinderteils des Lagergehäuses 4 (vgl. Fig. 1). Ein Kolbenring 17 liegt an der Innenfläche der Hülse 15 dicht an und ragt in die Umfangsnut 11 der Welle 18. Auf diese Weise wirkt der Kolbenring 17 dichtend auch dann, wenn er nicht am Boden der Umfangsnut 11 schleift, mit der er zusammen eher eine Art Labyrinthdichtung bildet. Es versteht sich, daß gewünschtenfalls auch mehrere solcher Kolbenringe vorgesehen sein können oder daß ein radial von der abstehender Flansch in eine Nut der Abschlußwand 5' ragt.

Die Hülse 15 ist in die Abschlußwand 5' eingepaßt. Gewünschtenfalls kann diese Hülse am Außenumfang Vorsprünge 19 oder einen Ring aufweisen, der in eine entsprechende Nut der Wand 5' einfällt, um ihre axiale Lage zu sichern. Sie kann aber auch an ihrem dem Rotor 3 zugekehrten Ende mit einem, z.B. umgebördelten, Flansch versehen werden, der sie axial festhält.

Wie schon erwähnt, besitzt die Welle 18 eine Einziehung oder Einschnürung 12. Diese Einschnürung kann an sich beliebige Formen annehmen, beispielsweise die einer zylindrischen Umfangsnut, die zu beiden Seiten von radial abstehenden Flächen, wie der Radialwandfläche 13 begrenzt ist. Bevorzugt ist die Einziehung 12 jedoch in der gezeigten Weise konisch ausgebildet.

Wenn, wie bevorzugt, die Hülse 15 als vollkommener Hohlzylinder ausgebildet ist, so wird sie, wenigstens nach dem Aufschieben auf die Welle 18 und vor der Befestigung des Rotors 3 an der Welle 18 jene Zylinderform 15 haben, die in Fig. 2 links dargestellt ist. Es stellt sich nun das Problem "wie kommt das (in der Figur obere) freie Ende in die von der Einziehung 12 gebildete Vertiefung?". Denn damit würde sich ja eine Art Formschluß zwischen der Einziehung 12 und der Hülse 15 ergeben. Die erfindungsgemäß bevorzugte Lösung dieses Problems liegt darin, daß die Hülse 15 aus einem Gedächtnis-Metall oder "memory metal" besteht, dessen Gedächtnis ein Knick 20 eingegeben wird.

Sobald also einmal in diesem Bereich während des Betriebs höhere Temperaturen herrschen, wird die Hülse 15 auf Grund des Gedächtnisses ihre ursprüngliche, geknickte Lage 15' (rechts in Fig. 2) einnehmen und damit ihr freies Ende 21 unter das "Dach" der Radialwandfläche 13 der Einziehung 12 (also derjenigen Fläche, welche sich beim Ausdrehen der Einziehung 12 an der Welle 18 übrig bleibt) begeben. Diese Radialwandfläche kann noch vergrößert werden, wenn anschließend an die Einziehung 12 ein von der Welle 18 radial abstehender Radkörper 14 vorgesehen, d.h. entweder aufmontiert oder in die Welle 18 gedreht, wird. Ferner ist es zur Abdeckung des freien Endes 21 der Hülse günstig, wenn der Radkörper 14 einen zur Hülse 15 hin auskragenden Rand 16 besitzt.

Aus Fig. 2 ist ersichtlich, daß also der Radkörper 14 zusammen mit dem eingeknickten Abschnitt 15' der Hülse eine Art "Dach" bildet, über das allfällige Schmiermittelflüssigkeit herunterrinnt und von der Welle 18 und ihrer Dichtung 11, 17 abgeleitet wird. Dazu ist die obere freie und von der Hülse 15 abgewendete Radialfläche 22 des Radkörpers 14 noch von Vorteil, weil sie sich ja bei einer Turbine mit hoher Geschwindigkeit dreht und daher etwaiges auf sie rinnenden Schmieröl nach außen schleudert und so die Dichtwirkung unterstützt.

Im Rahmen der Erfindung sind zahlreiche Varianten denkbar; denn es wurde bereits erwähnt, daß die Erfindung zwar mit besonderem Vorteil bei senkrecht stehenden Wellen anwendbar ist, doch ergibt sie auch bei waagrechten Wellen einen besseren Dichtungseffekt. Ferner kann der gezeigte Rotor 3 der Turbinenrotor eines Turboladers sein, wo besonders hohe Temperaturen auftreten und sich daher der Gedächtniseffekt der Hülse 15 am leichtesten verwirklichen läßt; die Anwendung der Erfindung ist jedoch nicht auf Turbolader beschränkt, vielmehr ist eine Anwendung bei anderen Strömungsmaschinen und mit den unterschiedlichsten Fluiden möglich. Bei solchen anderen Anwendungen muß das Leitgitter mit den Schaufeln 7 auch nicht unbedingt variabel sein.

Auch wurde schon gesagt, daß die Dichtung 11, 17 nur ein Beispiel darstellt und auf die verschiedenste Art abgewandelt werden kann. Ferner wurde die Einziehung 12 mit dem freien Ende 21 der Hülse 15 innerhalb des Zylinderteiles 5 des Lagergehäuses 4 gezeigt; theoretisch wäre es möglich, diese Anordnung hinter den Rotor 3 in dessen Rotorraum 3' zu verlegen, wobei beispielsweise die sich radial (bezüglich der Achse R) erstreckende, in Fig. 1 nach oben gekehrte Wand des Rotors 3 mit der Hülse 15 zusammenwirken und die Rolle des Radkörpers 14 übernehmen könnte, doch ist ersichtlich, daß einerseits die Platzverhältnisse im Rotorraum 3' sehr beengt sind, anderseits ist die erfindungsgemäße Dichtung gemäß der obigen Erläuterung besonders gegen Flüssigkeiten wirksam.

Schließlich wurde oben die Möglichkeit erwähnt, die Hülse 15 mit Schlitzen zu versehen: Entweder sie mit einem durchgehenden Längsschlitz auszustatten, um sie um die Welle 18 wickeln zu können; allerdings mag dann der Längsschlitz als "Kapillarleiter" für die abzudichtende Flüssigkeit wirken, weshalb diese Ausführung weniger bevorzugt ist. Anderseits könnte das freie Ende 21 leichter den Knick 20 bilden (Fig. 2), wenn über den Umfang des Hülsenzylinders mehrere bis zur beabsichtigten Kante 20 reichende Schlitze eingebracht würden, die einander ja bei Auswirkung des Gedächtniseffektes des Metalls (vgl. rechte Darstellung in Fig. 2) überlappen würden und so eine Art "Schuppendach" ergäben.

## Patentansprüche

1. Strömungsmaschine (1), die folgendes aufweist:
eine Welle (18),
an deren Ende ein Rotor (3) befestigt ist;
ein Lagergehäuseteil (4) zum Lagern der Welle (18);
ein Rotorgehäuseteil (2) mit einem Rotorraum (3') zur Unterbringung des am Ende der Wellen (18) befestigten Rotors (3), und
eine Dichtung (11-17) zwischen Lagergehäuseteil (4) und Rotorraum (3'),
**dadurch gekennzeichnet, daß**
die Welle (18) eine, insbesondere konische, durch eine Radialwandfläche (13, 14) abgeschlossene Einziehung (12) aufweist, und daß die Dichtung (11-17) einen Hülsenkörper (15) besitzt, der an einem Gehäuseteil (5') befestigt ist und ein freies Ende (21) aufweist, das in die Einziehung (12) ragt, wo es von der Radialwandfläche (13, 14) abgedeckt ist.

2. Strömungsmaschine nach Anspruch 1, **dadurch gekennzeichnet, daß** der Hülsenkörper (15) mindestens im Bereiche seines freien Endes (21) aus einem Gedächtnis-Metall besteht und in mindestens annähernd zylindrischer Form auf die Welle (18) aufschiebbar ist, so daß er mit seinem freien Ende (21) über der Einziehung (12) liegt und unter Temperatureinwirkung auf Grund seines Gedächtnisses in die Einziehung (12) einfällt.

3. Strömungsmaschine nach Anspruch 1 oder 2, **dadurch gekennzeichnet, daß** die Welle (18) eine im wesentlichen vertikale Lage hat.

4. Strömungsmaschine nach einem der vorhergehenden Ansprüche, **dadurch gekennzeichnet, daß** die Einziehung (12) im Lagergehäuseteil (4) liegt.

5. Strömungsmaschine nach einem der vorhergehenden Ansprüche, **dadurch gekennzeichnet, daß** der Hülsenkörper (15) von einer ungeschlitzten Zylinderhülse gebildet ist.

6. Strömungsmaschine nach einem der vorhergehenden Ansprüche, **dadurch gekennzeichnet, daß** die Radialwandfläche (13, 14) einen zur Hülse (15) auskragenden Rand (16) besitzt.

7. Strömungsmaschine nach einem der vorhergehenden Ansprüche, **dadurch gekennzeichnet, daß** die Radialwandfläche (13, 14) mit einem von der Welle (18) radial abstehender Radkörper (14) ausgebildet ist.

8. Strömungsmaschine nach Anspruch 7, **dadurch gekennzeichnet, daß** der Radkörper (14) eine der Hülse (15) abgewandte freie Radialfläche (22) aufweist.

9. Strömungsmaschine nach einem der vorhergehenden Ansprüche, **dadurch gekennzeichnet, daß** die Dichtung (11-17) neben dem Hülsenkörper (15) auch noch eine weitere Dichtungsanordnung (11, 17) aufweist, und daß vorzugsweise die weitere Dichtungsanordnung (11, 17) einen Kolbenring (17) und/oder eine Labyrinthdichtungsanordnung umfaßt, bei der vorteilhaft ein Kolbenring (17) im Bereiche einer Gehäusewand (5') sich an die Innenfläche der Hülse (15) anschmiegt und in eine Nut (11 ) der Welle (18) ragt.

10. Strömungsmaschine nach einem der vorhergehenden Ansprüche, **dadurch gekennzeichnet, daß** sie als Turbolader ausgebildet ist und das genannte Rotorgehäuse (2) das Turbinengehäuse bildet.
